# EUROPEAN PATENT APPLICATION

(11) **EP 2 963 599 A1**
(43) Date of publication of application: **06.01.2016**
(21) Application number: 14174920.0
(22) Date of filing: 30.06.2014
(51) Int. Cl.: G06Q 10/08

(54) **Managing execution of a manufacturing order**

(71) Applicant: Siemens Aktiengesellschaft, 80333 München (DE)
(72) Inventor: Vecchio, Massimo, 16016 COGOLETO (GE) (IT)
(74) Representative: Maier, Daniel Oliver

(57) **Abstract**

The present invention provides a method and system for managing execution of a production order, via a MES system, comprising:
- associating pieces of equipment and their connections with nodes and arcs of a digraph reproducing a layout of a plant where the production has to be made, and storing data of said layout (101) as tables of said nodes and arcs;
- creating (102 - 105) at least one virtual line starting from a node selected as a root node and including a plurality of nodes reachable from the root node, the at least one virtual line lying over the plant layout;
- -storing (106) data of the at least one virtual line as tables of nodes and arcs of a sub-digraph representing the virtual line.

## Description

The invention relates to a method and a system for managing execution of a manufacturing order in a manufacturing process, especially in a production facility employing a computer managed manufacturing execution system (MES).

As defined by the Manufacturing Enterprise Solutions Association (MESA International), a MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication."

The functions that MES systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens Corp. offers a broad range of MES products under its SIMATIC® product family.

Typically, at engineering time, MES client applications are used by system engineers for customizations according to the specific manufacturing plant requirements. Instead, at runtime, MES client applications are utilized by end-users such as plant operators or line responsible personnel.

An accurate modeling of the manufacturing process is essential for both scheduling and execution and to eventually achieve a good level of operational performance in manufacturing activities.

A well known example of a model for manufacturing is found in a standard called ISA-S95. It defines schemes for the individual production steps, the schemes containing rules about information exchange between different production phases required in the manufacturing execution system. The ISA-S95 standard is the common basis used for the development of MES systems.

In execution of production orders, an important issue when passing from the Enterprise Resource Planning (ERP) level to the Manufacturing Execution System (MES) is defining which pieces of equipment are to be used at a specific moment in a specific production plant (routing management and configuration through the various steps of the production, involving, among other aspects, generation of equipment segment specifications, transfer of materials between equipment belonging to successive phases...). To this end, the technician is to specify, within a product production rule, the pieces of equipment that can potentially be used in each process segment or specify such pieces from time to time during creation of an order. These operations are complex and time consuming, especially when several routing alternatives exist, and it is therefore be desirable to automate them as much as possible.

A step towards automation of such procedure is provided by the use of "virtual lines" as proposed by Siemens Corp. in its SIMATIC IT (in short, SIT) system. A "virtual line" represents the set of equipment pieces a product will go through during production. The concept of a virtual line is important because the ERP level contains the information about which line must be used to make the product, but may not have the detailed knowledge about which pieces of equipment are involved in the line at a specific moment. Therefore, it is necessary to consult a "look up" table (containing the information about the real involved equipment) to translate an ERP order into a MES order related to a specific plant and the virtual lines can be considered as an implementation of such a look-up table. The virtual lines in SIT are created and maintained by a library named Industry Libraries Hybrid - Line Management Library (ILH-LMG). Some information about ILH-LMG can be found in document "SIMATIC IT Industry Libraries Hybrid for Process - Functional Overview", available on the website www.siemens.com.

Yet, the present design of the virtual lines is not integrated with the design of the layout of the plant, so that automation of a number of mechanisms, such as building the equipment segment specifications for all phases of an order and the search for equipment units following and preceding a unit of interest was impossible.

It is an object of the present invention to provide a method and a system that allow an enhanced automation of the management and execution of production orders within MES Systems.

The object is achieved through a method and a system for managing execution of a production order, via a MES system, in a plant including a plurality of pieces of equipment and of connections between pieces of equipment, comprising the step of defining virtual lines representing the set of pieces of equipment a product will go through during production, and further comprising the steps of:
- associating equipment pieces and their connections with nodes and arcs of a digraph reproducing a layout of the plant, and storing data of said layout as tables of said nodes and arcs;
- creating at least one virtual line starting from a plant node selected as a root node and including a plurality of nodes reachable from the root node, the at least one virtual line lying over the plant layout;
- storing data of the at least one virtual line as tables of nodes and arcs of a sub-digraph representing the virtual line.

Thanks to the use of the virtual lines, once a line in which a production order is to be executed has been identified (either manually, by an operator, or automatically, from the work center of the order downloaded from the ERP level), the system can obtain the whole set of pieces of equipment to be used. Thanks to the integration of the virtual line design with the plant layout design, it is possible to define one or more "virtual routings" over the plant layout and the production execution can be directed at runtime on different routings. Moreover, substantially the whole of the operations involved in such definition is easily automated.

In embodiments of the present invention, the step of selecting the nodes concerned by the production order comprises specifying process phases to which the nodes selected belong, and, for each phase and each node in the phase, indicating whether the node is a default node or is relevant or non-relevant for that phase.

In embodiments of the present invention, the method comprises, after said inputting step, a step of associating material classes or material definitions with the virtual line.

In embodiments of the present invention, the method further comprises the step of building, at runtime, equipment specification or equipment requirement of one or more VLs for a given product segment or segment requirement in case of order or recipe import from a planning level or of manual creation thereof.

In embodiments of the present invention, creation of the virtual lines and the building of the equipment specification/equipment requirement are performed by means of APIs ((Application Program Interfaces)

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

The invention will now be described in preferred but not exclusive embodiments with reference to the accompanying drawings, wherein:
Figure 1: a digraph showing a plant layout;
Figs 2 to 6: an operator's computer screen during different phases of the creation of a virtual line;
Fig. 7: a flow chart of the method of the invention; and
Figures 8 and 9: the application of the invention in an exemplary practical case.

The following detailed description refers, for the sake of clearness, to the use of the invention within the SIT system.

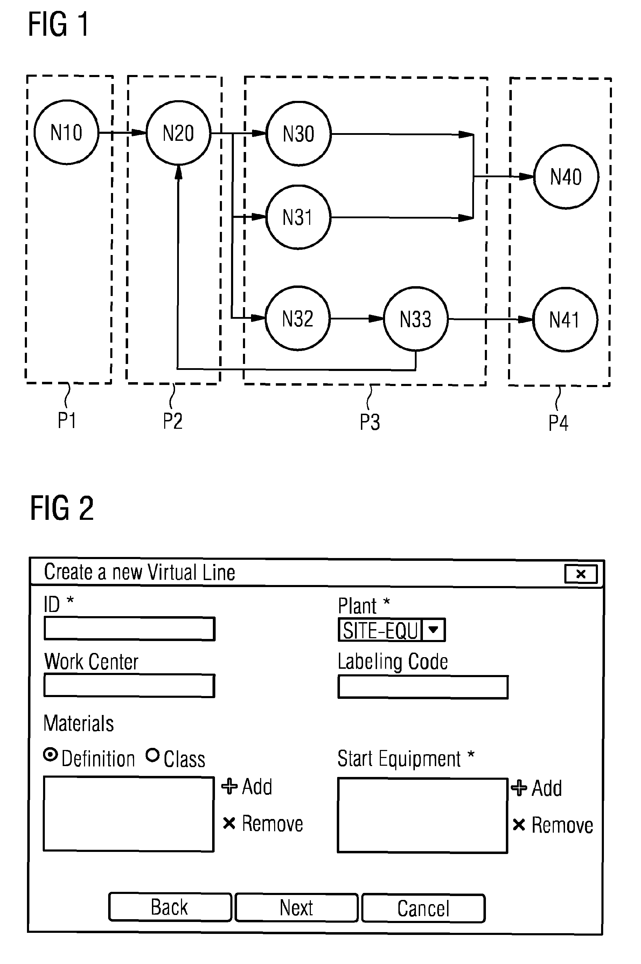

Fig.1 shows a directed graph (digraph) representing a plant layout as provided by the Production Modeler (PM) of SIT (a graphical tool enabling the user to follow the entire lifecycle of a MES project) and a single virtual line (VL) based on said layout. As known, a VL is an ordered and connected set of pieces of equipment (or equipment units), where the pieces of equipment and their connections form the nodes and the arcs or edges of the digraph, respectively. Taking this into account, the terms "node" and "equipment" (or equipment unit) will be used in interchangeable manner. In the present case, there is the constraint that a node cannot be connected to itself.

The VL exactly reproduces the plant layout and it does not define connections between nodes different from the physical connections. This avoids duplicating graphical procedures and repeating the connection configuration in different points of the system, what would result in an increase in the system complexity and in data duplication, which would be of difficult maintenance in case of updates.

It is assumed here that physical connections defined on the PM exist for any equipment unit added to a VL (completely connected VL). However, even non-connected VLs could exist, where no equipment has physical connections defined. The different nodes can belong to different production phases (product segments), shown by dotted-line boxes P1...P4 in Fig. 1.

The above digraph is represented in SQL (Structured Query Language) by a table of the nodes (i.e. a representation in table form of the object "Equipment" of standard ISA-S95) and a table of the arcs ("adjacency matrix"). Such tables, herein named "BPM_EQUIPMENT" and "BPM_EQUIPMENT_PHYSICAL_LINK", may have the following structure:
1. BPM_EQUIPMENT
   TABLE [dbo].[BPM_EQUIPMENT] (
      [equip_id] [nvarchar](255) NOT NULL,
      [equip_name] [nvarchar](200) NOT NULL,
      [equip_uuid] [nvarchar](150) NOT NULL,
      [equip_superior] [nvarchar](255) NOT NULL,
      [equip_class_pk] [int] NULL,
      [equip_class_lvl_pk] [int] NOT NULL,
      [module_pk] [int] NOT NULL,
      [equip_in_plant] [bit] NOT NULL,
      [equip_status] [smallint] NOT NULL,
      [equip_label] [nvarchar](255) NOT NULL,
      [RowUpdated] [datetime] NOT NULL,
      [equip_pk] [int] IDENTITY(1,1) NOT NULL
2. BPM_EQUIPMENT_PHYSICAL_LINK
   TABLE [dbo].[BPM_EQUIPMENT_PHYSICAL_LINK] (
      [equip_source_pk] [int] NOT NULL,
      [equip_dest_pk] [int] NOT NULL,
      [connection_type] [nvarchar](3) NOT NULL,
      [RowUpdated] [datetime] NOT NULL

The meaning of the various fields is clear for the skilled in the art.

The VL entity and the whole of the information characterizing it are represented by means of dedicated tables, herein named "Equipment", "Virtual Line" and "Material". A possible structure of such tables is reported below:
1. VirtualLine
   TABLE [dbo].[VirtualLine] (
      [VLPK] [int] NULL,
      [VLID] [nvarchar](4000) NULL,
      [LabelingCode] [nvarchar](4000) NULL,
      [WorkCenter] [nvarchar](4000) NULL,
      [Plant] [nvarchar](4000) NULL
2. Equipment
   TABLE [dbo].[Equipment]
      [EquipmentID] [nvarchar](4000) NULL,
      [VirtualLine] [int] NULL,
      [Phase] [nvarchar](4000) NULL,
      [Relevant] [nvarchar](4000) NULL,
      [IsPhaseDefault] [int] NULL
3. Material
   TABLE [dbo].[Material] (
      [MaterialID] [nvarchar](4000) NULL,
      [MaterialClassID] [nvarchar](4000) NULL,
      [VirtualLine] [int] NULL

In table "VirtualLine", the plant corresponds to the site of the Equipment Hierarchy Model of standard ISA-S95.

Table "Equipment" establishes a relation between BPM_EQUIPMENT and VirtualLine tables. Besides the identities of the VL and the equipment, table "Equipment" contains information about the phase, as well as information on whether, in a phase, a unit is a default unit or is relevant or non-relevant for the phase (i.e. whether it has an active role or it is included in the product segment but has no active role). Table "Material" is a representation in table form corresponding to the "material definition" object of standard ISA-S95.

Given a VL and a node thereof, it is necessary to browse inside the VL by moving through the nodes preceding and following the considered one. The search takes into account, in the order, the position in the plant (distance between nodes), the default/relevant/non-relevant condition, and the identifier of the equipment. To this end, a set of API functionalities are provided by the ILH-LMG library, in the form of Transact-SQL (T-SQL) table functions to be used in SQL Query Builders (SQB) of PM rules, and of corresponding BREAD (Browse, Read, Edit, Add and Delete) objects exposing the respective T-SQL function in the .NET layer to provide data base access to the SIT components. More particularly, the T-SQL functions of such a set include:
1. fnLMG_GetPreviousEquipment
   Input:
      @equipmentId [nvarchar](255),
      @virtualLineId [nvarchar](255),
      @plantName [nvarchar](100),
      @showOnlyDefault [bit] = 0,
      @showOnlyRelevant [bit] = 1
   Output:
      EquipmentPk [int] NOT NULL,
      EquipmentId [nvarchar](255) NOT NULL,
      Phase [nvarchar](4000) NOT NULL,
      IsDefault [bit] NOT NULL,
      IsRelevant [bit] NOT NULL,
      SequenceNumber [int] NOT NULL,
      DistanceInPlant [int] NULL
2. fnLMG_GetNextEquipment
   Input:
      @equipmentId [nvarchar](255),
      @virtualLineId [nvarchar](255),
      @plantName [nvarchar](100),
      @showOnlyDefault [bit] = 0,
      @showOnlyRelevant [bit] = 1
   Output:
      EquipmentPk [int] NOT NULL,
      EquipmentId [nvarchar](255) NOT NULL,
      Phase [nvarchar](4000) NOT NULL,
      IsDefault [bit] NOT NULL,
      IsRelevant [bit] NOT NULL,
      SequenceNumber [int] NOT NULL,
      DistanceInPlant [int] NULL
3. fnLMG_GetEquipmentBreadthFirstBackward
   Input:
      @startEquipmentId [nchar](255),
      @endEquipmentId [nvarchar] (255) = NULL
   Output:
      EquipmentPk [int] NOT NULL,
      EquipmentId [nvarchar](255) NULL,
      EquipmentLabel [nvarchar](100) NOT NULL,
      Distance [INT] NOT NULL
4. fnLMG_GetEquipmentBreadthFirstForward
   Input:
      @startEquipmentId [nchar](255),
      @endEquipmentId [nvarchar](255) = NULL
   Output:
      EquipmentPk [int] NOT NULL,
      EquipmentId [nvarchar](255) NULL,
      EquipmentLabel [nvarchar](100) NOT NULL,
      Distance [INT] NOT NULL
   Function 1 provides the set of equipment units immediately preceding a node Nx inputted as argument; it uses function 3 that explores the whole of the equipment back to the root equipment unit by taking into account also the distance, in steps, between the returned equipment units and Nx. Function 2 provides the set of equipment units immediately following Nx and uses function 4, which is the equivalent of function 3 in forward direction.
   Breadth-First Search (BFS) algorithms as implemented by functions 3 and 4 are well known to the skilled in the art. The corresponding BREAD objects are:
5. LMGParametricEntitiesTypes.PreviousEquipmentInVirtualLine
   Input:
      equipmentId String
      @virtualLineId String,
      @plantName String,
      @showOnlyDefault String,
      @showOnlyRelevant String
   Output:
      EquipmentPk Int32,
      EquipmentId String,
      Phase String,
      IsDefault Boolean,
      IsRelevant Boolean,
      SequenceNumber Int32,
      DistanceInPlant Nullable<Int32>
6. LMGParametricEntitiesTypes.NextEquipmentInVirtualLine
   Input:
      @equipmentId String
      @virtualLineId String,
      @plantName String,
      @showOnlyDefault String,
      @showOnlyRelevant String
   Output:
      EquipmentPk Int32,
      EquipmentId String,
      Phase String,
      IsDefault Boolean,
      IsRelevant Boolean,
      SequenceNumber Int32,
      DistanceInPlant Nullable<Int32>
7. LMGParametricEntitiesTypes.PreviousEquipmentInPlant
   Input:
      @startEquipmentId String
   Output:
      EquipmentPk Int32,
      EquipmentId String,
      EquipmentLabel String,
      Distance Int32
8. LMGParametricEntitiesTypes.NextEquipmentInPlant
   Input:
      @startEquipmentId String
   Output:
      EquipmentPk Int32,
      EquipmentId String,
      EquipmentLabel String,
      Distance Int32
   A further API functionality serves to build the equipment specification/equipment requirement of one or more VLs for a given product segment/segment requirement in case of order/recipe import from ERP or manual creation thereof. The T-SQL function and the BREAD object of such a further functionality, named herein fnLMG_GetVirtualLineEquipment-Specification and LMGParametricEntitiesTypes.VirtualLines-EquipmentSpecification are to retrieve the list of execution equipment, alternative execution equipment and equipment specification items for each phase of each VL (by workcenter, list of VLs, default VL, phase) as follows:
   - for each phase defined by all VLs compute the list of default execution equipment, alternative execution equipment and accessory equipment related to the phase as follows:
      a. set the default execution equipment of the phase as the default equipment of the default VL passed in input to the API functionality;
      b. set the list of alternative execution equipment as the union without duplication of:
         i. the list of relevant equipment for that phase of each VL;
         ii. the list of the default equipment for that phase of all VLs (containing that phase) except the one set as default for the phase at the previous step;
      c. for each execution equipment (default and alternative ones) defined for the phase, set the list of accessory items of the execution equipment as the union without duplication of all non-relevant equipment connected to that execution equipment inside all VLs for the phase at the previous step.
   The T-SQL function and the BREAD object of the above API are:
9. fnLMG_GetVirtualLinesEquipmentSpecification
   Input:
      @workcenter nvarchar(255),
      @virtualLineList nvarchar(max),
      @defaultVirtualLine nvarchar(255),
      @phase nvarchar(255)
   Output:
      EquipmentPk [int] NOT NULL,
      EquipmentId [nvarchar](255) NOT NULL,
      IsMain [bit],
      IsAlternative [bit] ,
      Superior [nvarchar](255),
      Phase [nvarchar](255) NOT NULL,
      VirtualLine [nvarchar](255) NOT NULL
10. LMGParametricEntitiesTypes.NextEquipmentInPlant
   Input:
      @workCenter String,
      @virtualLineList String,
      @defaultVirtualLine String,
      @phase String
   Output:
      EquipmentPk Int32,
      EquipmentId String,
      VirtualLine String,
      IsAlternative Boolean,
      IsMain Boolean,
      Phase String,
      Superior String

At runtime, the information on the list of VLs used for an order is then stored into the system database through a suitable field of the request segment.

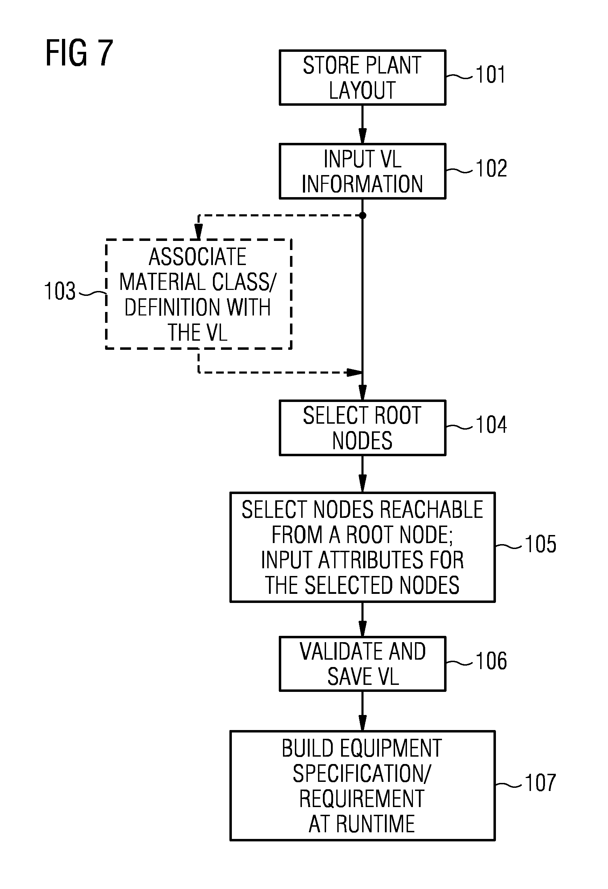

The invention also provides a graphical user interface (GUI) providing an operator with the pop-ups allowing creating virtual lines in guided manner by creating the corresponding physical connections in the modeling environment. The VL creation entails different steps, for each of which the GUI provides a suitable popup, as shown for an exemplary case in Figs. 2 to 6. Note that such Figures refer to a plant layout different from that of Fig. 1. Reference is also made to the flow chart of Fig. 7, which refers to the creation of a single VL.

First of all, the plant layout will have to be stored in the database of the system (step 101 in Fig. 7). Then, for the creation of the VLs, an initial popup (Fig. 2) allows the operator to input the details of the VL: identity, plant, work centre and labeling code (step 102).

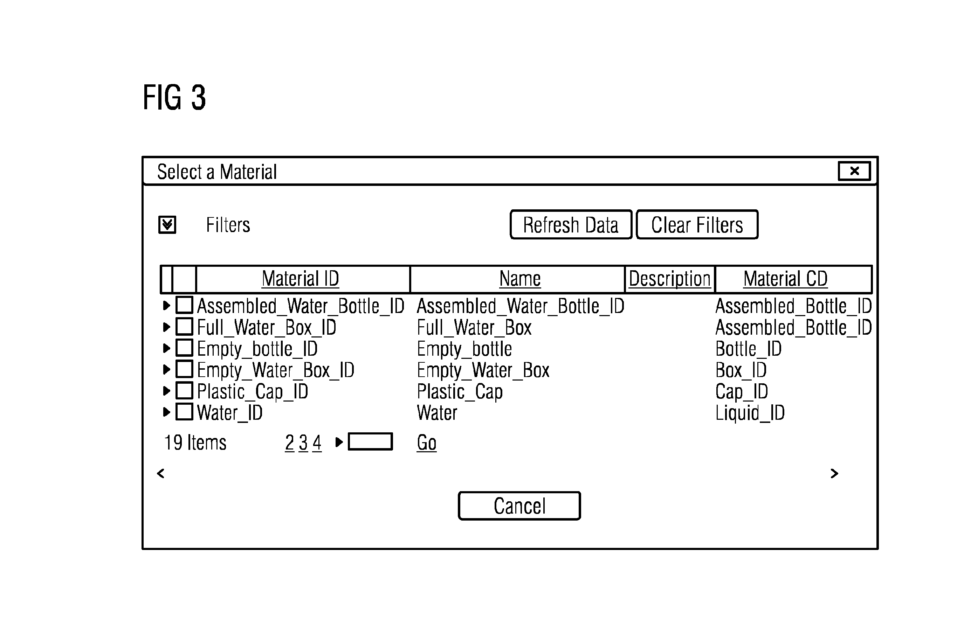

In a subsequent, optional step 103, the operator, through the popup of Fig. 3, can associate with the VL the material class (defined in standard ISA-S75 as a means describing a grouping of materials with similar characteristics for purposes of scheduling and planning) or the material definition (a definition of the properties and characteristics for a substance), depending on the required granularity.

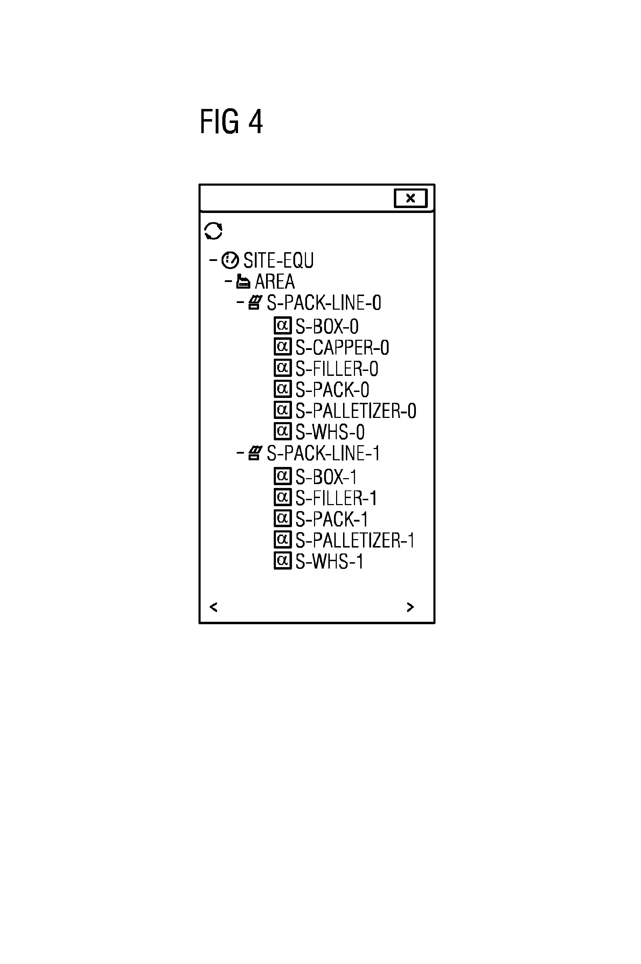

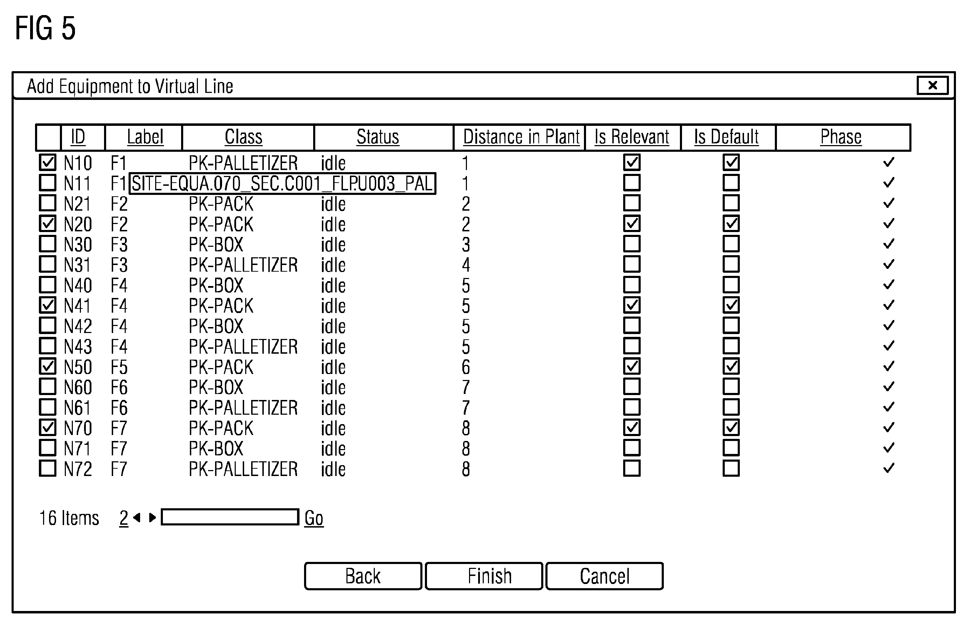

Then, the operator is to select the root equipment units (step 104 and Fig. 4), after what the system will show, in the form of a multi-choice grid, all units reachable from the selected root units (Fig. 5) through physical connections of the plant layout. For the units of interest for the new virtual line, the operator will specify the attributes of relevance for the runtime: main (default unit), alternative (relevant unit), accessory (non-relevant unit), production phase, directly on the grid (step 105 and Fig. 5).

At the end of this step, the system will validate the virtual line just created (step 106). A VL is valid when the following criteria are met:
- all equipment pieces selected have a phase;
- for each phase exists one and only one default equipment piece;
- each possible routing includes a subset of equipment pieces physically connected so as to form a continuous path, without gaps;
- each possible routing starts from a root equipment;
- each possible routing contains the same ordered phase sequence.

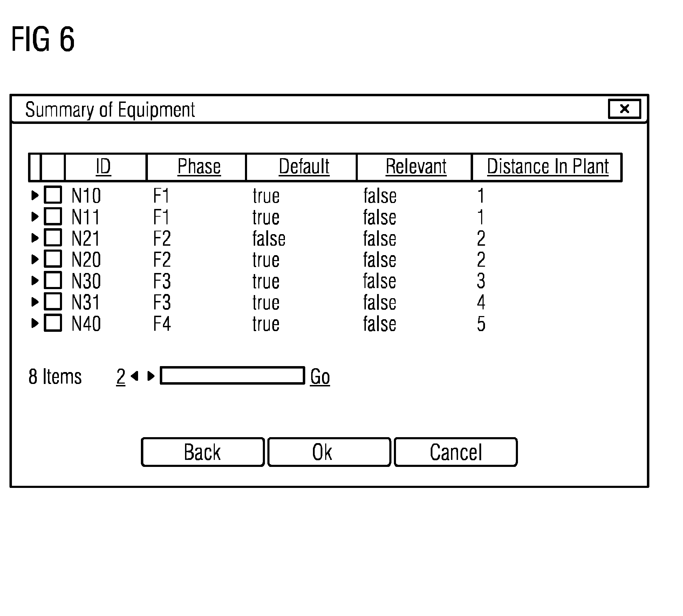

If the validation has been successful a summary table (fig. 6) will be shown and the VL can be saved in the library (step 106). If validation is not successful, an error popup will be displayed, listing the inconsistencies found in the validation step for the necessary connections.

The creation of the VLs takes place in the engineering phase. At runtime, the equipment specification/equipment requirement is then created (step 107), as disclosed above in connection with T-SQL function 9 and BREAD object 10.

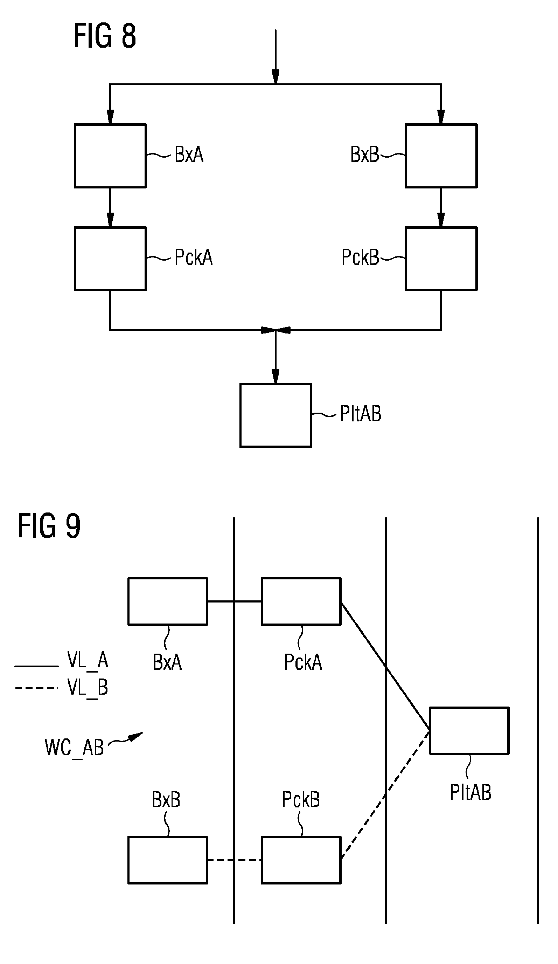

A practical example of how virtual lines can be used in a real scenario will be now described, with reference to Figs. 8 and 9.

Let us consider a packaging process made of three process segments:
- Boxing
- Packing
- Palletizing
and assume that this process is carried out in a packaging line made of five equipment units:
- Box (two units, denoted BxA, BxB in Figs. 8 and 9)
- Packer (two units, PckA and PckB)
- Palletizer (a single unit, PltAB)

Under this hypothesis, the equipment hierarchy may be as follows:
ENTERPRISE
   I_SITE
      I_SEC_AREA
         I_PACK_LINE
            I_BxA
            I_BxB
            I_PckA
            I_PckB
            I_PltAB

The physical connections between the equipment units within the packaging line, instead, can vary depending on the physical plant layout and the process needs. Given the packaging line layout of Fig. 8, we can now identify work centers and virtual lines to easily map ERP work centers to ISA-S95 areas and work cells. Suppose that the packaging line is used for the packaging of two different products A and B, and that box and packer can manage only one kind of product, we can design one work centre WC_AB (that covers the whole packaging line) and two virtual lines (VL_A and VL_B), as shown in Fig. 9. The MES database will then store the following data:

**BPM_EQUIPMENT**

| **ID** | **Superior** | **Class** |
|---|---|---|
| SITE.SEC_AREA.PACK_LINE.BxA | SITE.SEC_AREA.PACK_LINE | BOX |
| SITE.SEC_AREA.PACK_LINE.BxB | SITE.SEC_AREA.PACK_LINE | BOX |
| SITE.SEC_AREA.PACK_LINE.PckA | SITE.SEC_AREA.PACK_LINE | PACKER |
| SITE.SEC_AREA.PACK_LINE.PckB | SITE.SEC_AREA.PACK_LINE | PACKER |
| SITE.SEC_AREA.PACK_LINE.PltAB | SITE.SEC_AREA.PACK_LINE | PALLETIZER |

**BPM_EQUIPMENT_PHYSICAL_LINK**

| **Source Equipment** | **Destination Equipment** |
|---|---|
| SITE.SEC_AREA.PACK_LINE.BxA | SITE.SEC_AREA.PACK_LINE.PckA |
| SITE.SEC_AREA.PACK_LINE.BxB | SITE.SEC_AREA.PACK_LINE.PckB |
| SITE.SEC_AREA.PACK_LINE.PckA | SITE.SEC_AREA.PACK_LINE.PltAB |
| SITE.SEC_AREA.PACK_LINE.PckB | SITE.SEC_AREA.PACK_LINE.PltAB |

**EQUIPMENT**

| **ID** | **Phase** | **Relevant** | **IsPhase Default** | **Virtual Line** |
|---|---|---|---|---|
| SITE.SEC_AREA.PACK_LINE.BxA | Boxing | 1 | 1 | VL_A |
| SITE.SEC_AREA.PACK_LINE.PckA | Packing | 1 | 1 | VL_A |
| SITE.SEC_AREA.PACK_LINE.PltAB | Palletizing | 1 | 1 | VL_A |
| SITE.SEC_AREA.PACK_LINE.BxB | Boxing | 1 | 1 | VL_B |
| SITE.SEC_AREA.PACK_LINE.PckB | Packing | 1 | 1 | VL_B |
| SITE.SEC_AREA.PACK_LINE.PltAB | Palletizing | 1 | 1 | VL_B |

**VIRTUALLINE**

| **ID** | **Work Centre** | **Plant** |
|---|---|---|
| VL_A | WC_AB | SITE |
| VL_B | WC_AB | SITE |

**MATERIAL**

| **Virtual Line** | **Material Definition** | **Material Class** |
|---|---|---|
| VL_A | Material A | Material Class A |
| VL_B | Material B | Material Class B |

In such a scenario, when an ERP production order is downloaded to the MES layer or a new order is created from a recipe, the system derives the following information:
- the MES work centre given the ERP work centre -> WC_AB;
- the list of the involved virtual lines given the ERP work centre -> VL_A and VL_B;
- the list of virtual lines for the material produced according to the specific order -> VL_A or VL_B;
- the execution (default) equipment unit for each product segment;
- the list of alternative (relevant) execution equipment units for each product segment;
- the list of the accessory (non-relevant) equipment units for each execution equipment unit.

By using this data the system can build the equipment segment specification for each product segment, through the algorithm implemented by T-SQL function fnLMG_GetVirtualLineEquipment-Specification and BREAD object LMGParametricEntitiesTypes.-VirtualLinesEquipmentSpecification.

When a material consumption declaration occurs for a specific product segment, the system should move the consumed material to the execution equipment. These materials are consumed from the previous segments so that the previous equipment has to be derived. Assuming that virtual line VL_B is being used and that material consumption declaration occurs for equipment PltAB, equipment PckB is retrieved by means of T-SQL function fnLMG_GetPreviousEquipment and BREAD object LMGParametric-EntitiesTypes.PreviousEquipmentInVirtualLine.

In addition to the embodiments of the present invention described above, the skilled persons in the art will be able to arrive at a variety of other arrangements and steps which, if not explicitly described in this document, nevertheless fall within the scope of the appended claims. In particular, even if reference has been made to SIMATIC system, the skilled in the art will have no problem in applying the teaching of the invention to other MES systems.

## Claims

1. A method of managing execution of a production order, via a MES system, in a plant including a plurality of pieces of equipment and of connections between pieces of equipment, comprising the step of defining virtual lines representing a set of pieces of equipment a product will go through during production, **characterized in that** the method further comprises the steps of:
- associating pieces of equipment and their connections with nodes and arcs of a digraph reproducing a layout of the plant, and storing data of said layout (101) as tables of said nodes and arcs;
- creating (102 - 105) at least one virtual line starting from a node selected as a root node and including a plurality of nodes reachable from the root node, the at least one virtual line lying over the plant layout;
- storing (106) data of the at least one virtual line as tables of nodes and arcs of a sub-digraph representing the virtual line.

2. The method of claim 1, wherein the step (102 - 105) of creating a virtual line includes:
- inputting (102) information allowing identifying and characterizing the virtual line:
- selecting (104) the root node(s);
- selecting (105) nodes concerned by the production order and reachable by the or each root node.

3. The method of claim 2, wherein the step (105) of selecting the nodes concerned by the production order comprises a step of specifying process phases to which the nodes selected belong, and, for each phase and each node in the phase, indicating whether the node is a default node or is relevant or non-relevant for that phase.

4. The method of claim 2, further comprising, after said inputting step (102), a step (103) of associating material classes or material definitions with the virtual line.

5. The method of any of claims 1 to 4, comprising the step of providing a graphical user interface allowing an operator to carry out the method steps.

6. The method of any of claims 1 to 5, wherein the step (102 - 105) of creating the at least one virtual line is performed by means of APIs.

7. The method of claim 6, wherein said APIs comprise at least a set of APIs arranged to provide nodes immediately preceding or respectively following a given node and to explore the whole of the equipment back or respectively forward until end nodes, by taking into account also a distance, in steps, between the returned nodes and the given node.

8. The method of any of claims 1 to 7, further comprising the step of building, at runtime, equipment specification or equipment requirement of one or more VLs for a given product segment or segment requirement in case of order or recipe import from a planning level or of manual creation thereof.

9. The method of claim 8, wherein said building step is performed by a further API arranged to retrieve a list of default nodes, relevant nodes and accessory nodes for each phase of each VL.

10. A system for managing execution of a production order, via a MES system, in a plant including a plurality of pieces of equipment and of connections between pieces of equipment, comprising means for defining virtual lines representing a set of pieces of equipment a product will go through during production, **characterized in that** the system further comprises the following means:
- means for associating pieces of equipment and their connections with nodes and arcs of a digraph reproducing a layout of the plant, and means for storing data of said layout as tables of said nodes and arcs;
- means for creating at least one virtual line starting from a node selected as a root node and including a plurality of nodes reachable from the root node, the at least one virtual line lying over the plant layout;
- means for storing data of the at least one virtual line as tables of nodes and arcs of a sub-digraph representing the virtual line.

11. A computer program product for performing steps of the method according to any of the claims 1 to 9.
